# EUROPEAN PATENT APPLICATION

(11) **EP 3 219 557 A1**
(43) Date of publication of application: **20.09.2017**
(21) Application number: 15858821.0
(22) Date of filing: 31.08.2015
(51) Int. Cl.: B60R 21/231, B60R 21/207

(54) **SIDE AIR-BAG DEVICE**

(30) Priority: 13.11.2014 JP 2014230797
(71) Applicant: Takata Corporation, Tokyo 107-8508 (JP)
(72) Inventor: BOTILLER, Benjamin, Echi-gun, Shiga 529-1388 (JP)
(74) Representative: Banzer, Hans-Jörg
(86) International application number: PCT/JP2015/074634
(87) International publication number: WO 2016/075991

(57) **Abstract**

Provided is a side air-bag device in which a large quantity of gas can be supplied to the upper part of an air-bag without modifying the position and direction of mounting of an inflator to a seat-back frame. The side air-bag device includes an air-bag 20, a partition panel 24 that partitions an interior of the air-bag 20 into at least two chambers, an upper chamber and a lower chamber, a cylindrical guide cloth 30 disposed in a vertical direction in the air-bag20, and an inflator 1 disposed in the guide cloth 30 and having a gas ejection opening 1a at a lower end. The guide cloth 30 is open at a top, closed at a bottom, and has a gas outlet 30a at a side near a lower part.

## Description

### Technical Field

The present invention relates to a side air-bag device for restraining an occupant of an automobile or the like at side impact or the like, and in particular, to a side air-bag device including an air-bag whose interior is partitioned into a plurality of chambers.

### Background Art

As well known, side air-bag devices are configured to inflate an air-bag (a side air-bag) to a side of an occupant with an inflator to restrain the body of the occupant with the inflated air-bag.

Japanese Unexamined Patent Application Publication No. 2012-56506 (PTL 1) discloses a configuration for inflating the lower part of an air-bag, on which the waist of the occupant hits, earlier than the upper part.

In the side air-bag device disclosed in PTL 1, the interior of the air-bag is partitioned into three chambers of upper, middle, and lower, and gas from an inflator is supplied to the upper chamber and the lower chamber by a tubular diffuser. The diffuser has a tubular shape extending vertically. The inflator is disposed in this diffuser. The inflator is cylindrical and is disposed so that a gas ejection opening is at the lower end.

Some side air-bag devices in which the interior of the air-bag is vertically partitioned into a plurality of chambers need to inflate an upper chamber earlier than a lower chamber. In the case of a side air-bag device in which an inflator is disposed in a diffuser, as in PTL 1, the inflator can be vertically reversed from that of PTL 1 so that the gas ejection opening is located at the upper end of the inflator to supply a large quantity of gas to the upper chamber, thereby earlier inflating the upper chamber.

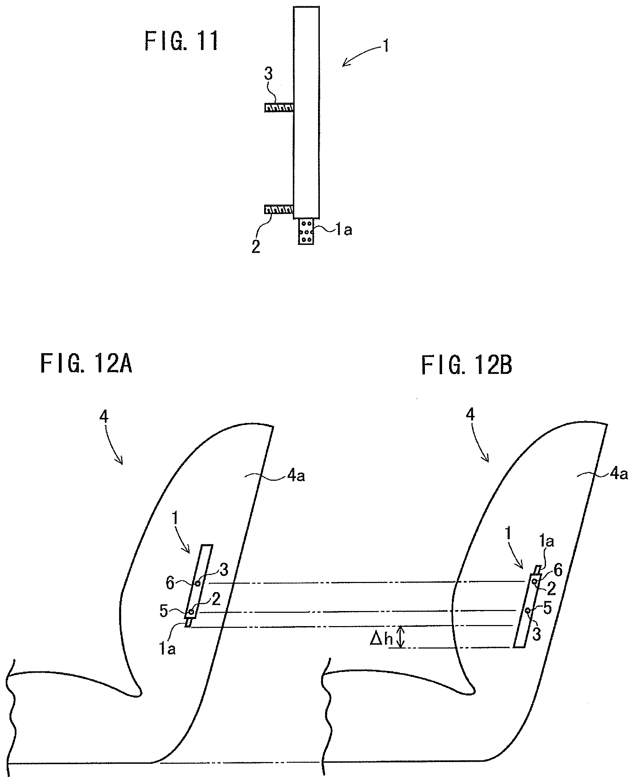

However, in a side air-bag device of a type in which an inflator is fixed to an automobile seat frame with stud bolts that are vertically erected from a side face of the inflator and in which the stud bolts are disposed asymmetrically in the longitudinal direction of the inflator, as illustrated in Fig. 11, disposing the inflator upside down will vertically shift the vertical position of the inflator.

This point will be described in detail with reference to Figs. 11, 12A, and 12B.

Fig. 11 is a side view of an inflator 1 with stud bolts widely used. This inflator 1 is cylindrical and has gas ejection openings 1a at one end. A first stud bolt 2 is disposed in the vicinity of the gas ejection openings 1a, and a second stud bolt 3 is disposed substantially at the center in the longitudinal direction of the inflator 1.

Figs. 12A and 12B are side views of an automobile front seat 4 including the inflator 1 illustrating a side surface of a seat back 4a in perspective view. The seat back 4a has a first bolt insertion hole 5 at an intermediate point in the vertical direction of the frame (seat-back frame) and a second bolt insertion hole 6 a predetermined distance above that.

In Fig. 12A, the first stud bolt 2 of the inflator 1 is inserted in the first bolt insertion hole 5, and the second stud bolt 3 is inserted in the second bolt insertion hole 6. By tightening nuts to the individual stud bolts 2 and 3, the inflator 1 is fixed to the seat-back frame together with the side air-bag. In Fig. 12A, the gas ejection openings 1a are disposed at the lower end of the inflator 1.

Fig. 12B illustrates a state in which the inflator 1 is mounted upside down to the seat-back frame. In Fig. 12B, the second stud bolt 3 of the inflator 1 is inserted in the first bolt insertion hole 5, and the first stud bolt 2 is inserted in the second bolt insertion hole 6. The gas ejection openings 1a is disposed at the upper end of the inflator 1.

Since the second stud bolt 3 is located at an intermediate point of the inflator 1 in the longitudinal direction, the position of the lower end of the inflator 1 in Fig. 12B is lower by Δh than that in Fig. 12A. As a result, the side surface of the seat back 4a in the vicinity of the lower end protrudes laterally by the diameter of the inflator 1.

When the side surface of the seat back 4a in the vicinity of the lower end protrudes laterally, it may interfere with surrounding car body members. For that reason, the structure in which the side surface of the seat back in the vicinity of the lower end is laterally protruded, as in Fig. 12B, may not be adopted.

To make the installation height of the inflator 1 illustrated in Fig. 11 equal to that in Fig. 12A, with the inflator 1 mounted to the seat-back frame so that the gas ejection openings 1a is located at the upper part, the positions of the bolt insertion holes 5 and 6 of the seat-back frame need to be higher than that of Fig. 12A by Δh. However, such a design change will not be adopted because it will result in multi-product small-volume production and high cost.

Patent Literature 1: Japanese Patent Publication No. 2012-56506

### Summary of Invention

It is an object of the present invention to provide a side air-bag device in which the problems of the related art are solved, and a large quantity of gas can be supplied to the upper part of an air-bag without modifying the position and direction of mounting of an inflator to a seat-back frame.

According to the present invention, a side air-bag device includes an air-bag, partition means that partitions an interior of the air-bag into at least two chambers, an upper chamber and a lower chamber, a cylindrical guide cloth disposed in a vertical direction in the air-bag, and an inflator disposed in the guide cloth and having a gas ejection opening at a lower end, wherein the guide cloth is open at a top, closed at a bottom, and has a gas outlet at a side near a lower part.

According to one aspect of the present invention, the guide cloth has no seamed portion at a front surface.

According to one aspect of the present invention, the guide cloth has no seamed portion at the bottom.

According to one aspect of the present invention, the partition means is a partition panel, and at the front of the air-bag, the partition panel decreases in width toward the front.

According to one aspect of the present invention, the partition panel is disposed to increase in height toward the front.

According to one aspect of the present invention, a space is provided between a trailing edge of the partition panel and a trailing edge of the air-bag, and the guide cloth is inserted in the space.

According to one aspect of the present invention, part of gas ejected downward from the inflator changes in flowing direction at the bottom of the guide cloth and flows toward the upper chamber. Advantageous Effects of Invention

In the side air-bag device of the present invention, an inflator is disposed in a cylindrical guide cloth in an air-bag, and the inflator has a gas ejection opening at a lower end. This guide cloth is open at the top, closed at the bottom, and has a gas outlet at a side near a lower part. Since the bottom of the guide cloth is closed, gas ejected downward from the inflator can be changed in direction to supply a large quantity of gas to the upper chamber.

Since the inflator has a gas ejection opening at the lower end, the inflator can be mounted also to a seat-back frame of existing design without changing in vertical position.

Since no seamed portion is provided at the front and the bottom of the guide cloth, the heat resistance of the front and the bottom is improved.

In an aspect of the present invention, the partition panel that partitions the air bag into an upper chamber and a lower chamber decreases in width toward the leading edge. Since the inflation thickness of the air-bag in the vicinity of the partition panel decreases toward the leading edge, resistance received when the air-bag inflates so as to enter between the occupant and the door is small.

Providing a space between the trailing edge of the partition panel and the trailing edge of the air-bag and disposing the guide cloth in this space allow gas flowing from the upper part of the guide cloth to flow directly into the upper chamber. Furthermore, since this space communicates the upper chamber and the lower chamber with each other, the gas pressure in both chambers after inflation can be equalized.

### Brief Description of Drawings

Fig. 1 is a perspective view of an automobile front seat equipped with a side air-bag device according to an embodiment.
Fig. 2 is a side view of an air-bag of the side air-bag device in Fig. 1.
Fig. 3 is a cross-sectional view taken along line III-III in Fig. 2.
Fig. 4 is a cross-sectional view taken along line IV-IV in Fig. 2.
Fig. 5 is a perspective view of a guide cloth.
Figs. 6A and 6B are diagrams illustrating folding the guide cloth into a pipe shape.
Fig. 7 is a diagram illustrating folding the guide cloth into a pipe shape.
Figs. 8A and 8B are diagrams illustrating folding the guide cloth into a pipe shape.
Figs. 9A and 9B are diagrams illustrating folding the guide cloth into a pipe shape.
Figs. 10A and 10B are diagrams illustrating folding the guide cloth into a pipe shape.
Fig. 11 is a side view of an inflator.
Figs. 12A and 12B are side views of a seat back.
Fig. 13 is a perspective view of a guide cloth according to another embodiment.

### Description of Embodiments

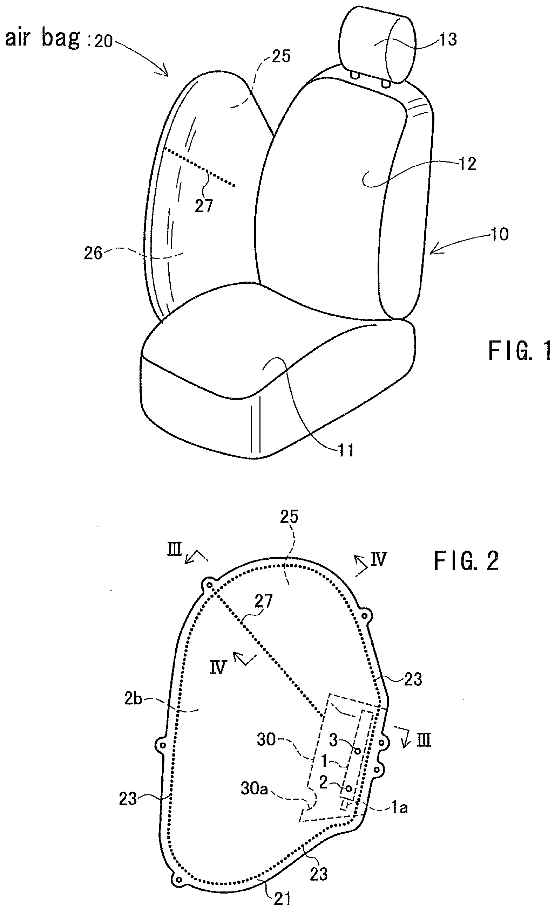

Referring to Figs. 1 to 10, a side air-bag device according to an embodiment will be described hereinbelow.

As illustrated in Fig. 1, an air-bag 20 of the side air-bag device is configured to inflate along a window-side side portion of a front seat 10. This seat 10 includes a seat cushion 11, a seat back 12, and a head rest 13.

The air-bag 20 is housed in a folded state on a side of the seat back 12 and is covered with a soft cover (not shown).

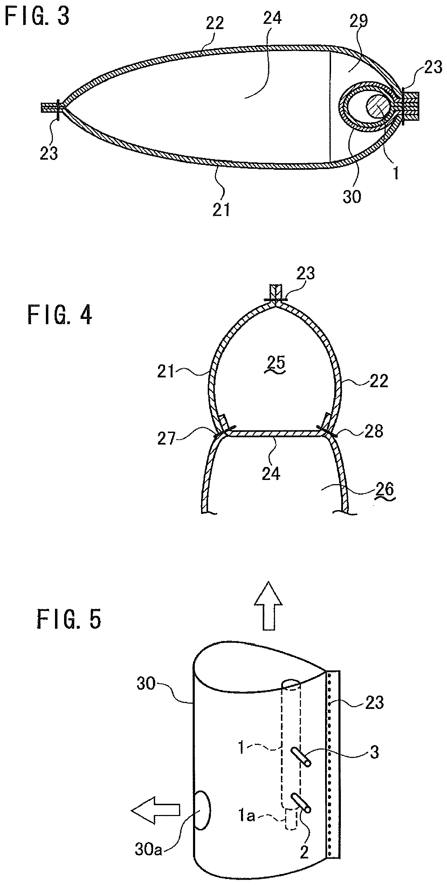

This air-bag 20 is formed into a bag shape by overlapping two cloths (panels) 21 and 22 together and sewing up their peripheries with a seam 23, as illustrated in Figs. 2 to 4. The interior thereof is partitioned by a partition panel 24 into an upper chamber 25 on the upper side and a lower chamber 26 on the lower side. This partition panel 24 is sewn to the panels 21 and 22 using seams 27 and 28. This partition panel 24 extends so as to be higher toward the leading edge (front edge) of the air-bag 20. Between the trailing edge (rear edge) of the partition panel 24 and the trailing edge of the air-bag 20, a space 29 (Fig. 3) communicating the upper and lower chambers 25 and 26 together is provided.

The front portion of the partition panel 24 decreases in width toward the front of the car body. For that reason, when the air-bag 20 inflates, the vicinity of the front of the partition panel 24 decreases in thickness gradually toward the leading edge of the air-bag 20. Therefore, the resistance when the inflating air-bag 20 enters between the occupant and the door is small.

This partition panel 24 extends so as to be higher toward the front. Therefore, the upper chamber 25 is quickly inflated and developed obliquely upward by the gas from the inflator 1 to restrain the upper part of the body of the occupant.

A pipe-shaped guide cloth 30 extends vertically through the space 29. This guide cloth 30 is formed into a bottomed cylindrical shape by folding a cloth (panel), in which the inflator 1 is disposed. The cylindrical guide cloth 30 is open at the top, closed at the bottom, and has a gas outlet 30a at the lower side surface, as illustrated in Fig. 5.

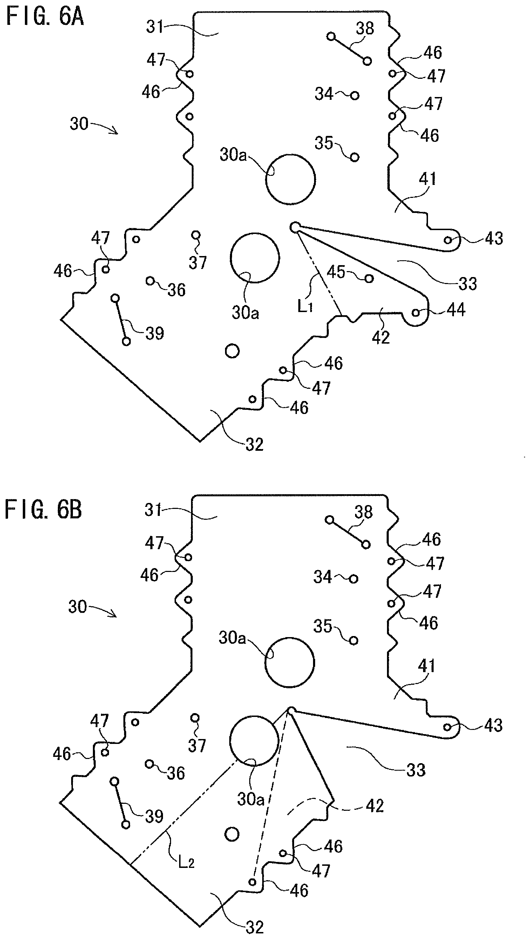

A folding procedure for folding the guide cloth 30 into a cylindrical shape will be described with reference to Figs. 6 to 10.

Fig. 6A illustrates the guide cloth 30 in a flat spread state. The guide cloth 30 includes a first leaf 31 and a second leaf 32 of a substantially rectangular shape. The first leaf 31 and the second leaf 32 are made up of one cloth. A V-shaped cut portion 33 is formed between the first leaf 31 and the second leaf 32.

Bolt insertion holes 34 and 35 and a slit 38 are provided on the right side of the first leaf 31. Bolt insertion holes 36 and 37 and a slit 39 are provided on the left side of the second leaf 32. The slits 38 and 39 are for use in inserting the inflator 1 into the cylindrical guide cloth 30. The first leaf 31 and the second leaf 32 have gas outlets 30a and 30a in the vicinity of the cut portion 33. The second leaf 32 has a bolt insertion hole 45 at the edge of the cut portion 33.

The first leaf 31 and the second leaf 32 include extending pieces 41 and 42 extending along the cut portion 33. At the end of the extending piece 41 is provided a small hole 43, and at the end of the extending piece 42 is provided a small hole 44. A plurality of protruding edges 46 are provided around the peripheries of the first leaf 31 and the second leaf 32, and each edge 46 has a small hole 47. A positioning rod is inserted into each of the small holes 43, 44, and 47 when the guide cloth 30 is folded.

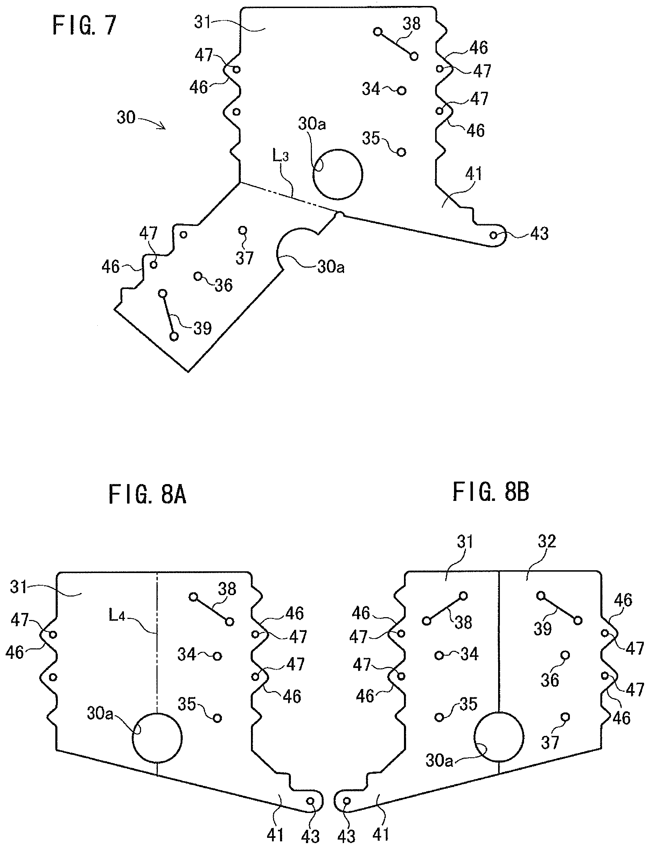

First, an area around an edge of the cut portion 33 including the extending piece 42 is folded along a bend line L₁ of the guide cloth 30 so as to overlap with the second leaf 3, as illustrated in Fig. 6B. Next, the second leaf 32 is folded into two along a bend line L₂ passing through the center of the second leaf 32 into the state illustrated in Fig. 7.

Next, the second leaf 32 is folded back along a bend line L₃ extending the boundary between the first leaf 31 and the second leaf 32 to overlap the first leaf 31 and the second leaf 32 into the state illustrated in Figs. 8A and 8B. Fig. 8B is a back view of Fig. 8A.

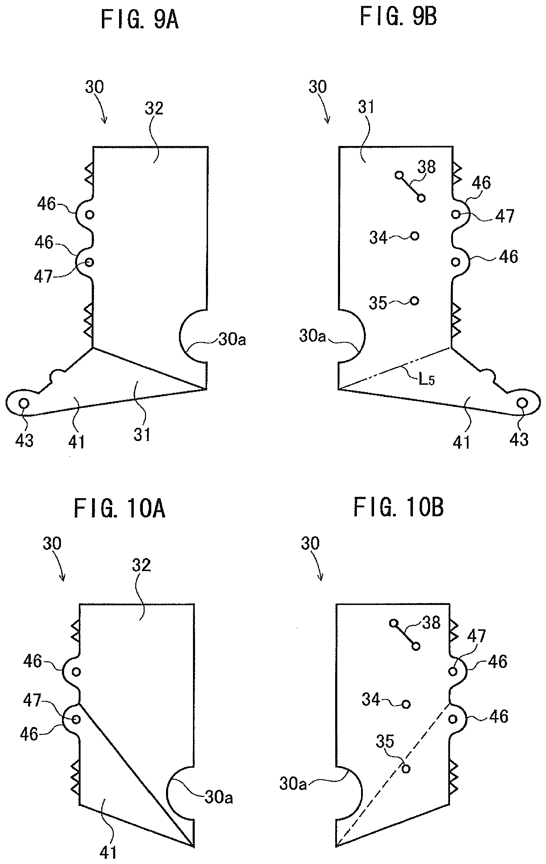

The first leaf 31 is folded back along a center line L₄ of the first leaf 31 from that state into the state illustrated in Figs. 9A and 9B. Fig. 9B is a back view of Fig. 9A.

Next, the lower part of the first leaf 31 is folded back along a bend line L₅ extending along the lower edge of the second leaf 32 to put the lower part of the first leaf 31 including the extending piece 41 on the second leaf 32 into the state illustrated in Figs. 10A and 10B. Fig. 10B is a back view of Fig. 10A. Thus, the folding ends. In that state, the bolt insertion holes 34 and 36 align, the bolt insertion holes 35, 37, and 45 align, and the slits 38 and 39 align.

This folded guide cloth is put between the panels 21 and 22, and the outer peripheral seam 23 is formed to sew the panels 21 and 22 and the folded guide cloth 30 together. As illustrated in Fig. 5, the seam 23 extends along a side in the vertical direction of the first and second leaves 31 and 32 of the guide cloth 30 to make the guide cloth 30 cylindrical. The panel 21 of the air-bag 20 has a slit (not shown) at a position aligned with the slits 38 and 39. This panel 21 has bolt insertion holes (not shown) at a position aligned with the bolt insertion holes 34 and 36 and at a position aligned with the bolt insertion holes 35, 37, and 45.

This cylindrical guide cloth 30 is a double cylinder in which the first and second leaves 31 and 32 are wound double. This cylindrical guide cloth 30 is a bottomed cylinder whose bottom is closed threefold by the vicinity of the bend line L₅, the vicinity of L₃, and the vicinity of L₁. At the front of the guide cloth 30, no seamed portion is present.

The outlets 30a of the first leaf 31 and the second leaf 32 are aligned and are open to the front of the vehicle on the lower side surface of the cylindrical guide cloth 30.

The inflator 1 is inserted into the guide cloth 30 through the slit (not shown) of the panel 21 of the air-bag 20 and the slits 38 and 39 of the guide cloth 30. Next, the stud bolt 2 is projected outside the air-bag 20 through the bolt insertion holes 45, 37, and 35 and the bolt insertion hole of the air-bag 20. The stud bolt 3 is projected outside the air-bag 20 through the bolt insertion holes 36 and 34 and the bolt insertion hole of the air-bag 20. The stud bolts 2 and 3 project outside the case (not shown) of the side air-bag device through the bolt insertion hole of the case. The air-bag 20 is folded, housed in the case, and covered with a module cover.

The stud bolts 2 and 3 projecting from the case of the side air-bag device are inserted into the bolt insertion holes of the seat-back frame and are tightened with nuts. Thus, the air-bag 20, the inflator 1, and the case are fixed to the seat-back frame.

In the side air-bag device mounted to the seat-back frame in this manner, since the inflator 1 is disposed such that the gas ejection openings 1a are directed downward, the mounting position and mounting height of the inflator 1 to the seat-back frame of existing design are unchanged.

When the inflator 1 operates, gas from the gas ejection openings 1a is guided by the guide cloth 30 and flows upward in a large quantity. In other words, since the bottom of the guide cloth 30 is closed, the gas flowing downward from the gas ejection openings 1a changes in flowing direction and flows into the upper chamber 25 in a large quantity. As a result, the upper chamber 25 inflates early. Gas flowing from the gas outlet 30a toward the front of the car body inflates the lower chamber 26. The thus-inflated air-bag 20 restrains the occupant.

In this embodiment, the front of the partition panel 24 is tapered, so that the inflation thickness of the air-bag 20 in the vicinity of the front of the partition panel 24 decreases toward the front. For that reason, resistance received when the air-bag 20 is developed between the occupant and the door is small. Since the partition panel 24 increases in height toward the front, the upper chamber 25 inflates forward, diagonally upward from the seat back to restrain the upper part of the body of the occupant.

In this embodiment, since the bottom of the cylindrical guide cloth 30 is closed in threefold by the vicinity of the bend line L₅, the vicinity of L₃, and the vicinity of L₁, and no seam is present at the bottom, the heat resistance of the bottom is high.

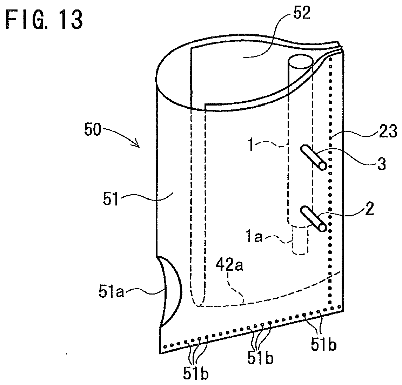

Fig. 13 illustrates a guide cloth 50 according to another embodiment. This guide cloth 50 includes an outer cloth 51 and an inner cloth 52. The outer cloth 51 has a gas outlet 51a at the lower front. The outer cloth 51 is formed by folding one cloth in two and sewing up the bottom with a seam 51b. The inner cloth 52 is formed by folding one cloth in two. The inner cloth 52 is inserted into the outer cloth 51, and the trailing edges thereof are sewn together with the panels 21 and 22 of the air-bag with an outer peripheral seam 23. The lower end of the inner cloth 52 is located in the vicinity of the bottom of the outer cloth 51. Also the guide cloth 50 has no seamed portion at the front.

The above embodiments are given for mere illustration; the present invention may be in a form other than illustrated. For example, the interior of the air-bag 20 of the above embodiments is partitioned into two chambers, the upper chamber 25 and the lower chamber 26. Alternatively, a three-chamber structure in which an intermediate chamber is formed between the upper chamber and the lower chamber, or a multi-chamber structure having three or more chambers is possible. In this case, gas is introduced into the intermediate chamber via one or both of the upper chamber and the lower chamber.

Although the present invention has been described in detail with reference to particular embodiments, it is apparent to a person skilled in the art that various modifications can be made therein without departing from the spirit and scope of the present invention.

The present application is based on Japanese Patent Application No. 2014-230797 filed on November 13, 2014, which is incorporated herein by reference in its entirety.

### Reference Signs List

- 1: inflator
- 2, 3: stud bolt
- 12: seat back
- 20: air-bag
- 23, 27, 28: seam
- 24: partition panel
- 25: upper chamber
- 26: lower chamber
- 29: space
- 30, 50: guide cloth
- 30a, 51a: gas outlet
- 31: first leaf
- 32: second leaf
- 34, 35, 36, 37, 45: bolt insertion hole
- 38, 39: slit

## Claims

1. A side air-bag device comprising:
an air-bag;
partition means that partitions an interior of the air-bag into at least two chambers, an upper chamber and a lower chamber;
a cylindrical guide cloth disposed in a vertical direction in the air-bag; and
an inflator disposed in the guide cloth and having a gas ejection opening at a lower end,
wherein the guide cloth is open at a top, closed at a bottom, and has a gas outlet at a side near a lower part.

2. The side air-bag device according to Claim 1, wherein the guide cloth has no seamed portion at a front surface.

3. The side air-bag device according to Claim 1 or 2, wherein the guide cloth has no seamed portion at the bottom.

4. The side air-bag device according to any one of Claims 1 to 3, wherein the partition means is a partition panel, and
wherein, at the front of the air-bag, the partition panel decreases in width toward the front.

5. The side air-bag device according to Claim 4, wherein the partition panel is disposed to increase in height toward the front.

6. The side air-bag device according to Claim 4 or 5, wherein a space is provided between a trailing edge of the partition panel and a trailing edge of the air-bag, and
wherein the guide cloth is inserted in the space.

7. The side air-bag device according to any one of Claims 1 to 6, wherein part of gas ejected downward from the inflator changes in flowing direction at the bottom of the guide cloth and flows toward the upper chamber.
